# EUROPÄISCHE PATENTANMELDUNG

(11) **EP 4 253 123 A1**
(43) Veröffentlichungstag der Anmeldung: **04.10.2023**
(21) Anmeldenummer: 23166334.5
(22) Anmeldetag: 03.04.2023
(51) Int. Cl.: B60K 35/00, B60K 37/04, B60R 11/02, B60R 21/203, B62D 1/06, B62D 1/10, B62D 1/16, B60R 11/00

(54) **FAHRZEUG-INFOTAINMENT-HALTEVORRICHTUNG**

(30) Priorität: 01.04.2022 LU 102925
(71) Anmelder: Hopper Mobility GmbH, 86154 Augsburg (DE)
(72) Erfinder: Halama, Martin, 86154 Augsburg (DE)
(74) Vertreter: Siebert-Henze, Ellen

(57) **Zusammenfassung**

Die Erfindung betrifft in das Lenksystem eines Fahrzeugs integrierte Fahrzeug-InfotainmentHaltevorrichtung (1.0), wobei eine Anzeigevorrichtung (2.0) nicht rotierbar über ein Innenrohr
(5.0) mit einem Fahrzeugrahmen (4.0) verbunden ist, wobei in einem Kabelkanal (5.1) eine Kabelverbindung (5.2) zur Anzeigevorrichtung (2.0) geführt oder führbar ist, wobei ein Lenkstange (3.3) drehbar um das Innenrohr (5.0) gelagert ist, wobei das Lenkmittel (3.2) um die Lenkachse (3.1) rotierbar ist und die Anzeigevorrichtung (2.0) statisch zur Lenkachse (3.1) ist.

## Beschreibung

### TECHNISCHES GEBIET

Die Erfindung betrifft eine in das Lenksystem eines Fahrzeugs integrierte Fahrzeug Infotainment-Haltevorrichtung nach Anspruch 1.

### STAND DER TECHNIK

Lenkmittel mehrspuriger Fahrzeuge können als rundes Lenkrad, als länglicher Lenker oder als Mischform ausgeführt sein. Insbesondere bei Fahrzeugen mit Lenkeinschlägen über 180 Grad wird eine annähernd runde Form eines Lenkrads bevorzugt.

Lenkräder befinden sich in der Regel zentral vor dem Fahrer und werden von diesem in der Regel mit beiden Händen bedient. Lenkräder bieten daher großes Potenzial als Bedienungs- und Informationsschnittstelle für den Fahrer. So werden beispielsweise im Automobilbereich im Griffbereich oder auf dem Lenkrad standardmäßig die Steuerungselemente für Funktionen wie Blinker, Licht, Hupe und Scheibenwischer angeordnet. Dazu kommen in modernen Fahrzeugen vermehrt Steuerungselemente für das Infotainmentsystem, Fahrmodi und die Gangschaltung.

Am Lenkrad fest verbaute Steuerungselemente setzen eine Verbindung zum entsprechenden Steuergerät oder Aktor an anderer Stelle im Fahrzeug voraus, auch bei beliebig eingeschlagenem Lenkwinkel. Diese Eigenschaft erfordert eine Entkopplung von der Drehbewegung des Lenkrads. Bei mechanischen Komponenten kann eine solche Entkopplung beispielsweise über ein Entkopplungselement, wie aus der US4653768A für Bremssysteme für Fahrräder bekannt, realisiert werden. Bei elektronischen Komponenten muss eine leitende Verbindung trotz Lenkradrotation gegeben sein. Diese kann durch aufwendige Schleifverbindungen oder Kabelabwicklungsmechanismen, wie aus der GB000002394604A bekannt, realisiert werden.

Am Lenkrad fest verbaut sind in der Regel Steuerungselemente (z.B. Lenker-, Scheibenwischerbedienung), die dann vom Fahrer mit den Händen am Lenkrad bedient werden können. Im Automobilbereich wird in der Regel die Hupe auf dem Lenkrad verbaut, um eine möglichst schnelle Reaktion des Fahrers zu ermöglichen. Außerdem werden FrontAirbags für den Fahrer bevorzugt im Lenkrad verbaut, da dieser vor dem Lenkrad als Kollisionselement im Crashfall geschützt werden soll.

Besonders sicherheitsrelevante Funktionen werden für gewöhnlich vorteilhaft so im Lenkradbereich platziert, dass sie entweder feststehend immer an der gleichen Stelle befindlich sind (z.B. Blinker, Fernlicht), oder im Bereich des Drehzentrums des Lenkrads angeordnet sind (z.B. Hupe). Dadurch wird erreicht, dass ein Fahrer auch bei schnellen, ausladenden Lenkraddrehbewegungen die Übersicht und Kontrolle über wichtige Funktionen behält.

Für den Airbag, der sich im Crashfall stark ausdehnt und den Fahrer vor Verletzungen schützt, ist eine möglichst fixe Positionierung ebenfalls erstrebenswert. Dadurch kann die Ausdehnung gezielt in die richtigen Raumrichtungen erfolgen und die Form des Airbags entsprechend gestaltet werden.

Eine Möglichkeit, eine stationäre Positionierung von Steuerungselementen zu erreichen, ist deren Positionierung direkt hinter dem Lenkrad in Reichweite der das Lenkrad steuernden Hand, beispielsweise bei den Blinker- und Lichtsteuerungen im Fahrzeugbereich. Bei auf dem Lenkrad verbauten Elementen ist eine stationäre Positionierung komplizierter, aber insbesondere erstrebenswert für die sicherheitskritischen Elemente, die vorzugsweise auf dem Lenkrad verbaut werden sollen, wie Hupe und Airbag. Eine Variante ist aus der US4561324A bekannt, in der eine aufwendige Getriebevorrichtung die stationäre Position einer Steuerungs- und Anzeigeplatte während einer Lenkraddrehbewegung ermöglicht.

Aus der DE60201489T2 bekannt ist eine Lenkvorrichtung, durch die eine Lenkradnabe bei einer Lenkbewegung bis zu einem vorher festgelegten Winkel mit dem Lenkrad mitrotiert und ab dem festgelegten Winkel statisch bleibt. Diese Lenkradnabe kann als Aufnahme von Steuerungsmitteln bzw. Airbags dienen. Vorteilhaft wird hier gewährleistet, dass bei kleinen Lenkbewegungen Steuerungselemente in Reichweite der Finger des Fahrers am Lenkrad bleiben, indem sich die Steuerungselemente mitbewegen. Bei größeren Lenkbewegungen, bei denen der Fahrer umgreift, werden dagegen statische Positionen bevorzugt. Darüber hinaus wird die maximale Abweichung der Airbagposition begrenzt. In der DE60200754T2 ist eine Lösung mit elektrischer aktuierter Lenkung umgesetzt. Die Konstruktion ist eine Kompromisslösung für Ergonomie und Sicherheit, aber konstruktiv aufwendig und daher für einfache, günstige Fahrzeuge weniger geeignet.

### AUFGABE

Ausgehend vom Stand der Technik besteht die Aufgabe der vorliegenden Erfindung darin, eine Halterung von Steuerungs-, Informations- und Sicherheitskomponenten am Lenkmittel eines Fahrzeugs bereitzustellen. Die erfindungsgemäße Vorrichtung soll konstruktiv besonders einfach und daher insbesondere für günstige Fahrzeuge, insbesondere mehrspurige Fahrräder, geeignet sein. Die Vorrichtung soll eine statische Anordnung der Anzeigevorrichtung (Steuerungs-, Informations- und Sicherheitskomponenten) erlauben. Die Kabelverbindungen zur Anzeigevorrichtung sollen dabei einfach und wartungsarm zwischen der Lenkradvorrichtung und dem Fahrzeug verlegt werden können.

### LÖSUNG

Die Aufgabe wird mit einer Lenkradvorrichtung mit den Merkmalen des Anspruchs 1 gelöst. Weitere vorteilhafte Ausgestaltungen sind den Unteransprüchen, der Beschreibung und den Ausführungsbeispielen zu entnehmen.

### ALLGEMEINE VORTEILE

Die vorliegende Erfindung ermöglicht eine besonders einfache Konstruktion zur statischen Positionierung von Komponenten in einem für den Fahrer ergonomisch vorteilhaft erreichbaren zentralen Bereich mittig vor dem Lenkrad. Bei Komponenten wie insbesondere Airbag, Hupe und weiteren wichtigen Steuerungs- und Anzeigekomponenten ist eine solche statische Positionierung funktional und ergonomisch wünschenswert. Die vorliegende Konstruktion ist daher insbesondere für die Bedienung und korrekte Funktion dieser Komponenten vorteilhaft. Die Konstruktion ist besonders einfach aufgebaut, da Sonderkonstruktionen für die elektrische Verbindung rotativer Komponenten durch die Nutzung eines Innenrohrs als Kabelkanal ersatzlos entfallen. Besonders einfach ist die Konstruktion weiterhin dadurch, dass das Innenrohr mit dem Fahrzeugrahmen sehr einfach, zum Beispiel durch Verschraubung, verbunden werden kann und Lenkstange und Innenrohr durch eine einfache Lagerkonstruktion ineinander gelagert werden.

### BESCHREIBUNG DER ERFINDUNG

Die vorliegende Erfindung betrifft eine Fahrzeug-Infotainment-Haltevorrichtung (1.0) zur zentralen Halterung einer Anzeigevorrichtung (hierin auch: Steuerungs-, Anzeige- und/oder Sicherheitsvorrichtung) (2.0) an einem Lenksystem (3.0) eines Fahrzeugs. Das Fahrzeug umfasst hierbei einen festen Fahrzeugrahmen (4.0). Das Lenksystem umfasst eine Lenkstange (3.3) sowie ein Lenkmittel (3.2). Die Haltevorrichtung umfasst ein Innenrohr (5.0), eine Lagerungs- oder Befestigungsvorrichtung (6.0) sowie zumindest eine Kabelverbindung (5.2). Die Steuerungs-, Anzeige- und/oder Sicherheitsvorrichtung (2.0) umfasst eine weiter unten beschriebene Kombination an Einzelkomponenten und zumindest eine Grundhalterung (2.2).

Nachfolgend wird als fahrernaher Punkt ein Punkt verstanden, welcher sich aus Sicht des Lenksystems näher am Fahrer des Fahrzeugs und damit entgegen der Fahrtrichtung befindet als ein fahrerferner Punkt, welcher sich weiter in Fahrtrichtung befindet.

Unter dem Lenksystem eines Fahrzeugs wird eine Vorrichtung verstanden, die der Einstellung der Fahrtrichtung des Fahrzeugs durch den Fahrer dient, in der Regel durch Einstellung des Winkels der Räder von zumindest einer Achse. In dieser Erfindung ist nicht die gesamte Verbindung von der Lenkeingabe des Fahrers bis zur Winkeleinstellung des Rades als Lenksystem bezeichnet, sondern nur das Lenkmittel als Bedienelement des Fahrers sowie die Lenkstange (auch: Lenkwelle) als Verbindungskomponente zum Lenkmittel.

Unter einem Fahrzeugrahmen (auch: Fahrzeuggestell, Chassis, Untergestell) (4.0) wird eine Konstruktion verstanden, welche die tragenden Teile von Fahrzeugen bezeichnet. Tragende Teile haben die Funktion, den Antrieb, die Karosserie (auch: Aufbaukonstruktion) und die Nutzlast zu tragen und gegen äußere Krafteinwirkungen zu stabilisieren. Der Fahrzeugrahmen besteht vorzugsweise aus Metallwerkstoffen, z.B. Aluminium oder insbesondere Stahl, seltener aus Faserverbundstoffen. In Bezug auf die Erfindung dient der Fahrzeugrahmen insbesondere als Tragevorrichtung für das Lenksystem und die 20 Haltevorrichtung.

Das Lenksystem ist für eine Rotation um eine Lenkachse (3.1) eingerichtet. Die Lenkachse ist koaxial zum Lenkstange (3.3) und im Mittelpunkt des runden Querschnitts der Lenkstange positioniert. Die Lenkstange rotiert somit ausschließlich radial entlang seines Umfangs.

Das Lenksystem ist am Fahrzeugrahmen drehbar gelagert. Dabei erlaubt diese Lagerung die beschriebene Rotation des Lenksystems um die Lenkachse. Zum Erreichen dieser Rotation ist das Lenksystem am Rahmen vorzugsweise mittels zumindest zweier Lagerelemente, insbesondere zweier Radiallager (6.2) gelagert, welche die Lenkstange umgreifen. Die genaue Lagerungsart der Lenkung am Rahmen kann vom Fachmann frei bestimmt werden. Das Lenksystem umfasst ein Lenkmittel, welches der händischen Lenkeingabe durch den Fahrer durch die Drehung des Lenkmittels um einen gewünschten Lenkwinkel dient. Das Lenkmittel besitzt Griffflächen für die Hände des Fahrers. Vorzugsweise ist das Lenkmittel als ein Lenkrad ausgestaltet. Ein Lenkrad bietet den Vorteil, dass kontinuierliche Griffflächen bei dynamischer Rotation die Bedienbarkeit des Lenkmittels durch den Fahrer verbessern. Weiterhin ist innerhalb des Durchmessers eines zumindest annähernd runden Lenkrads ausreichend Platz für die Anbringung der erfindungsgemäßen Steuerungs-, Anzeige- und/oder Sicherheitsvorrichtung (2.0) innerhalb des Lenkrads. Zur kollisionsfreien Ermöglichung dieser Anbringung ist das Lenkrad vorzugsweise trichterförmig ausgeführt, sodass die Griffflächen deutlich fahrernaher sind als die Lenkradmitte.

Die Griffflächen weisen einen für die Hände des Fahrers ergonomischen, vorzugsweise annähernd runden Querschnitt auf. Das Lenkmittel ist so steif ausgelegt, dass bei einer Lenkbewegung keine für den Fahrer merkliche Verbiegung des Lenkmittels auftritt und auch bei starker Lenkeinwirkung zu keinem Zeitpunkt bleibende Schäden am Lenkmittel auftreten. Entsprechend ist das Lenkmittel aus einem ausreichend stabilen Material wie Metall, hochfestem Kunststoff oder Faserverbundstoff konstruiert.

Das Lenkmittel ist fest (d.h. statisch fixiert) mit der Lenkstange (3.3) verbunden. Die Verbindung ist dabei vorzugsweise im Mittelpunkt des Lenkmittels positioniert. Diese Positionierung hat den vorteilhaften Effekt, dass das Lenkmittel rein radial um die Lenkachse rotiert.

Die Lenkstange dient der Lagerung des Lenksystems vorzugsweise mittels mit dem Fahrzeugrahmen verbundenen Radiallagern. Die Lenkstange ist als Rundrohr ausgestaltet, kann allerdings zur axialen Sicherung des Lenksystems Nuten, z.B. für das Einfügen von Sicherungsringen, aufweisen. Eine alternative axiale Sicherung des Lenksystems ohne Veränderung des Rohrdurchmessers kann durch thermisches Fügen von Radiallagern auf die Lenkstange erreicht werden, wodurch das Lager fest mit der Lenkstange verbunden wird. In einer bevorzugten Ausgestaltung umfasst die Lenkstange zumindest ein radiales Lenkzugelement (3.4). Dieses ist dazu eingerichtet, eine durch einen Fahrer am Lenkmittel bewirkte Lenkbewegung an zumindest eine Radachse zu übertragen. Ein Lenkzugelement kann bspw. aus einem Drahtseil gebildet sein, welches mit der Lenkstange verbunden ist. Eine Drehung der Lenkstange um die Längsachse der Lenkstange bewirkt ein Aufwinden oder Abwinden des radialen Lenkzugelements um die Lenkstange.

Die Lenkstange ist aus steifem und festem Material wie Metall oder Faserverbundstoff gestaltet, vorzugsweise aus Stahl aufgrund dessen einfacher Verarbeitbarkeit, günstiger Beschaffung und hohen Steifigkeit. Dadurch wird eine geringe elastische Verformung des Lenksystems unter Kraftaufbringung des Fahrers gewährleistet.

Die Haltevorrichtung für das Lenksystem umfasst bevorzugt ein Innenrohr (5.0), welches koaxial innerhalb der Lenkstange angeordnet ist. Entsprechend muss der Außendurchmesser des Innenrohrs geringer als der Innendurchmesser der Lenkstange gestaltet sein. Vorzugsweise ist das Innenrohr ebenfalls ein Rundrohr, da ein solches als Lagersitz dienen kann uns Vorteile bezüglich Platznutzung und Steifigkeit aufweist.

Das Innenrohr dient primär der Kabeldurchführung und der statischen Aufnahme der Steuerungs-, Anzeige- und/oder Sicherheitsvorrichtung, sodass die aufzunehmenden Kräfte geringer als bei der Lenkstange sind. Insbesondere ohne Lagerung zwischen Innenrohr und Lenkstange, oder wenn die Steuerungs-, Anzeige- und/oder Sicherheitsvorrichtung ein Sicherheitselement, z.B. einen Airbag, enthält, erfordert der Innenrohrquerschnitt dennoch eine hohe Steifigkeit. Insbesondere in diesem Fällen ist ein steifes Material wie Stahl oder Faserverbundstoff zu bevorzugen.

Das Innenrohr ist länger als die Lenkstange bemessen. Dadurch ragt es an beiden Enden aus der Lenkstange heraus und kann auf der fahrerfernen Seite fest mit dem Fahrzeugrahmen verbunden werden und auf der fahrernahen Seite eine feste Aufnahme der Steuerungs-, Anzeige- und/oder Sicherheitsvorrichtung bilden.

Die feste Verbindung mit dem Fahrzeugrahmen wird durch die Lagerungs- oder Befestigungsvorrichtung erreicht. Am fahrerfernen Innenrohrende wird diese Verbindung vorzugsweise durch eine Schraubverbindung (6.4) umgesetzt, z.B. durch ein Außengewinde auf dem Innenrohr und einem komplementären Innengewinde im Fahrzeugrahmen. Alternativ dazu kann die Verbindung mit zusätzlichen Schraubenbauteilen, Steck- oder Schweißverbindungen umgesetzt werden.

Zusätzlich kann das Innenrohr mithilfe von Lagern von innen an der Lenkstange abgestützt werden. Dadurch kann die Biegesteifigkeit der gesamten Fahrzeug-InfotainmentHaltevorrichtung, wenn nötig, erhöht werden. Weiterhin kann durch zumindest ein Lager (6.1) zwischen Innenrohr und Lenkstange die axiale Sicherung des Lenksystems in Richtung Fahrer ermöglicht werden.

Als dritte Komponente umfasst die Haltevorrichtung Kabelverbindungen (5.2), welche durch das Innenrohr gelegt sind, welches als Kabelkanal (5.1) fungiert. Die Kabelverbindungen dienen der elektrischen Verbindung der Steuerungs-, Anzeige- und/oder Sicherheitsvorrichtung im Bereich des Lenkmittels mit anderen elektrischen Geräten im restlichen Fahrzeug, beispielsweise Batterien, Sensoren, Leuchtmittel, oder Steuergeräten. Wie im Stand der Technik beschrieben stellen Kabelverbindungen bei rotierenden Bauteilen eine Herausforderung dar, welche häufig durch teure und aufwendige Konstruktionen gelöst wird. Durch die Nutzung des durchgängigen Innenrohrs als Kabelkanal wird die Verbindung von elektronischen Elementen in Richtung des Fahrers vor dem Lenkrad von dem rotierenden Lenkrad selbst entkoppelt. Aufwendige rotationstolerante elektrische Verbindungen entfallen dadurch ersatzlos. Gleichzeitig ist die Anzahl und die Komplexität der Komponenten von Lenksystem und Haltevorrichtung relativ gering.

Ziel aller Komponenten der Haltevorrichtung ist, die statische Positionierung im zentralen Bereich des Lenkmittels sowie den Betrieb einer Steuerungs-, Anzeige- und/oder Sicherheitsvorrichtung zu gewährleisten. Diese ist fest mit dem fahrernahen Innenrohrende verbindbar oder verbunden. Vorzugsweise wird durch die Größe der Steuerungs-, Anzeige- und/oder Sicherheitsvorrichtung und den Überstand des fahrernahen Innenrohrendes über die Länge der Lenkstange ermöglicht, dass die Steuerungs-, Anzeige- und/oder Sicherheitsvorrichtung mit möglichst geringem Abstand in fahrernaher Richtung vor dem Lenkmittel positioniert ist.

Die Anzeigevorrichtung (hierin auch: Steuerungs-, Anzeige- und/oder Sicherheitsvorrichtung, Fahrzeug-Infotainment) umfasst eine Kombination von Elementen, welche aus technischen oder ergonomischen Gründen bevorzugt statisch zentral am Lenkmittel positioniert werden sollen. Dazu zählen Sicherheitselemente (auch: sicherheitsrelevante Steuerelemente), insbesondere Airbags, deren Funktion durch die nicht-drehbare Positionierung direkt vor dem Fahrer vorteilhaft sichergestellt wird. Dazu zählen weiterhin Steuerungselemente, insbesondere solche wie die Hupe, über deren Positionierung der Fahrer auch bei dynamischen Lenkmanövern aufgrund der Fahrzeugsicherheit nicht den Überblick verlieren sollte, was durch eine statische, zentrale Position vorteilhaft ermöglicht wird. Dazu zählen auch Anzeigeelemente (2.1), beispielsweise zum Fahrzeugstatus, Infotainment und Navigation, deren Ablesbarkeit durch eine statische, zentrale Positionierung im Zentrum des Lenkrades vorteilhaft gewährleistet wird. Verschiedene Ausführungen dieser Erfindung können dabei auch nur eine oder beliebige Kombinationen dieser Anzeigeelemente umfassen, um deren vorteilhafte Positionierung zu ermöglichen.

Die Steuerungs-, Anzeige- und/oder Sicherheitsvorrichtung umfasst zumindest eine Grundhalterung (2.2). Diese umfasst zwei Funktionen: Einerseits ermöglicht die Grundhalterung die stabile Verbindung der Steuerungs-, Anzeige- und/oder Sicherheitsvorrichtung mit dem Innenrohr, beispielsweise durch eine Steck- oder Schraubverbindung. Andererseits ermöglicht sie einen Untergrund zur Befestigung der Sicherheits-, Steuerungs- und Klemmelemente, beispielsweise durch Klemm-, Schraub- oder Klebverbindungen. Die Grundhalterung umspannt im Durchmesser vorzugsweise die gesamte Fläche der Steuerungs-, Anzeige- und/oder Sicherheitsvorrichtung und umfasst für gewöhnlich zumindest eine bezüglich Biegebelastung stabile Grundplatte (2.3). Diese ist vorzugsweise aus einem hochfesten Kunststoff, Faserverbundstoff oder einer Komposit- bzw. Sandwichstruktur gefertigt, um hohe Steifigkeiten zu erreichen.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

Weitere Vorteile, Merkmale und Anwendungsmöglichkeiten der vorliegenden Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Zudem ist darauf hinzuweisen, dass der Fachmann zweifelsohne erkennt, dass sich die einzelnen Merkmale, die in den vorstehenden konkreten Ausführungsformen beschrieben sind, auf angemessene Weise miteinander kombinieren lassen, soweit kein Widerspruch vorliegt, wobei zum Vermeiden unnötiger Wiederholung auf eine separate Beschreibung verschiedener möglicher Kombinationen verzichtet wird.

In einer weiteren Ausführungsform der Erfindung kann eine Distanzhülse zwischen dem Innenring des Lagerelements und der Grundplatte zur axialen Sicherung des Lenksystems dienen, wodurch vorteilhaft kompliziertere Konstruktionen zur axialen Sicherung entfallen.

Von der Erfindung ist auch die Verwendung der Fahrzeug-Infotainment-Haltevorrichtung (wie hierin definiert) in einem Fahrzeug, insbesondere in einem mehrspurigen Fahrrad mit umfasst.

Anders als beispielsweise bei herkömmlichen straßenbezogenen (Groß-)Kraftfahrzeugen (insbesondere Autos und Lastkraftwagen), die von Haus aus eine sehr gute Dämpfung/Federung aufweisen, besteht gerade bei leichten Fahrzeugen, wie mehrspurigen Fahrrädern die Herausforderung, dass Element, insbesondere Anzeigeelemente nicht ohne Weiteres gelagert werden können. Dies stellt insbesondere auf unebenen und holprigen Untergründen eine Herausforderung dar. Hierin bietet das erfindungsgemäße Lenksystem mit integrierter Fahrzeug-Infotainment-Haltevorrichtung eine einfache, platzsparende als auch gewichtsparende Lagerkonstruktion.

### AUSFÜHRUNGSBEISPIELE

Zur Erläuterung des Grundprinzips der erfindungsgemäßen Vorrichtung werden Ausführungsbeispiele dargestellt. Anzumerken ist, dass das Verhältnis, die Abmessungen, das Ausmaß der Verformung oder der Verschiebungsbetrag der erfindungsgemäßen Bauteile zu Gunsten der Darstellung nicht der Realität entsprechen.

Dabei zeigt:
Fig. 1: eine schematische Darstellung einer Fahrzeug-Infotainment-Haltevorrichtung (1.0) in einem Längsquerschnitt zur Lenkachse (3.1).
**Fig. 2****:** eine schematische Darstellung einer Fahrzeug-Infotainment-Haltevorrichtung (1.0) in einem Längsquerschnitt zur Lenkachse (3.1).
**Fig. 3****:** eine schematische Darstellung einer Fahrzeug-Infotainment-Haltevorrichtung (1.0) in einem Längsquerschnitt zur Lenkachse (3.1).
**Fig. 4A****+B:** eine beispielhafte Anordnung einer Anzeigevorrichtung (2.0) im Zentrum eines Lenkmittels (3.2) in einer Draufsicht.

In den unterschiedlichen Figuren sind hinsichtlich ihrer Funktion gleichwertige Teile stets mit denselben Bezugszeichen versehen, sodass diese in der Regel auch nur einmal beschrieben werden.

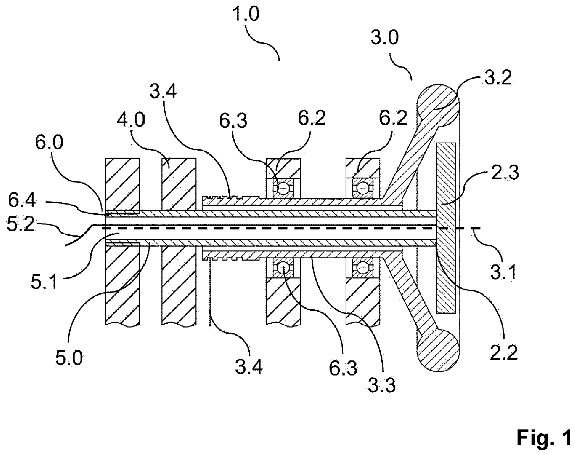

Die Ausführungsform gemäß **Fig. 1** stellt schematisch eine Fahrzeug-Infotainment-Haltevorrichtung **(1.0)** dar. Innerhalb des Lenkmittels **(3.2),** hier ein Lenkrad, ist die Grundplatte **(2.3)** der nicht dargestellten Anzeigevorrichtung **(2.0)** über die Grundhalterung **(2.2)** mit dem Innenrohr **(5.0)** verbunden. Das Innenrohr **(5.0)** ist über eine Lagerungs- oder Befestigungsvorrichtung **(6.0),** hier insbesondere eine Schraubverbindung **(6.4),** mit dem Fahrzeugrahmen **(4.0)** verbunden. Der Hohlraum innerhalb des Innenrohres **(5.0)** ist der Kabelkanal **(5.1),** durch den eine Kabelverbindung **(5.2)** geführt ist, die zur hier nicht dargestellten Anzeigevorrichtung **(2.0)** führt. Die Anzeigevorrichtung **(2.0)** kann über eine reversible Verbindung, bspw. eine Steck- oder Klemmverbindung mit der Grundplatte **(2.3)** verbunden werden. Somit kann bspw. ein Tablet oder ein anderes elektrisches Gerät schnell mit dem Fahrzeug reversibel verbunden werden. Damit ist vorteilhaft ein erhöhter Diebstahlschutz ermöglicht. Um das Innenrohr **(5.0)** ist die Lenkstange **(3.3)** angeordnet.

Diese ist in dieser vorzugsweisen Ausführung über die zwei Radiallager **(6.2),** welche als Kugellager **(6.3)** ausgeführt sind, im Fahrzeugrahmen **(4.0)** gelagert. Um zwischen dem Innenrohr **(5.0)** und der Lenkstange **(3.3)** vorteilhaft zusätzliche Lagerkomponenten einzusparen, ist das Innenrohr **(5.0)** nur über die Lagerungs- und Befestigungsvorrichtung **(6.0)** befestigt und nicht zusätzlich innen an der Lenkstange **(3.3)** gelagert. Die Stabilität des Innenrohrs wird dabei durch eine zweite Lagerungs- und Befestigungsvorrichtung am Fahrzeugrahmen **(6.0)** neben der Schraubverbindung **(6.4)** erreicht. Das Lenkmittel **(3.2)** sowie die Lenkstange **(3.3)** kann um die Lenkachse **(3.1)** rotiert werden.

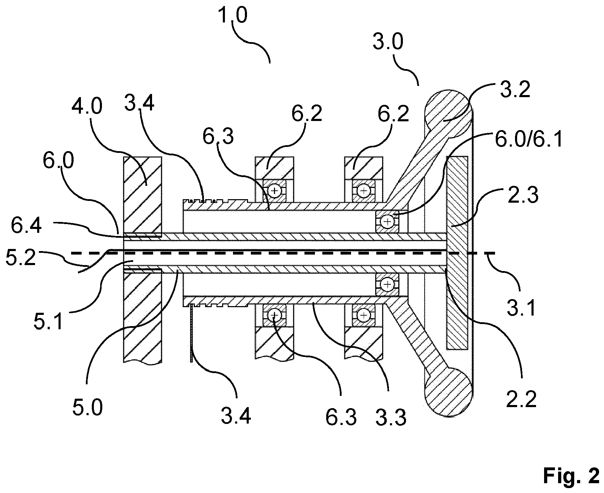

Die **Fig. 2** zeigt eine von Fig. 1 abgewandelte Ausführungsform, die sich von dieser darin unterscheidet, dass die Lagerungs- und Befestigungsvorrichtung **(6.0)** für das Innenrohr **(5.0)** neben der Schraubverbindung **(6.4)** ein Lagerelement **(6.1)** umfasst, hier beispielhaft als Kugellager ausgeführt, welches das Innenrohr von innen an der Lenkstange abstützt. Dadurch wird vorteilhaft eine erhöhte Stabilität des Fahrzeug-Infotainment-Haltevorrichtung **(1.0)** erreicht. Durch die Verwendung von Kugellagern entstehen geringe Reibungskräfte am Innenrohr bei einer Rotation des Lenksystems. In einer weiteren Ausführungsform der in **Fig. 2** dargestellten Ausführungsform dient eine Distanzhülse zwischen dem Innenring des Lagerelements **(6.1)** und der Grundplatte **(3.2)** zur axialen Sicherung des Lenksystems, wodurch vorteilhaft kompliziertere Konstruktionen zur axialen Sicherung entfallen.

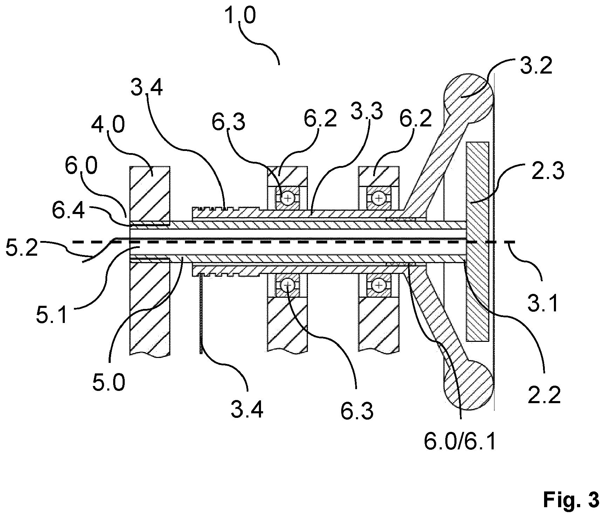

Die **Fig. 3** zeigt eine von Fig. 2 abgewandelte Ausführungsform, wobei zwischen Lenkstange **(3.3)** und Innenrohr **(5.0)** das Lagerelement **(6.1)** als Gleitlager so ausgebildet ist, dass dieses aus Ringen aus einem gleitfähigen Kunststoff (z.B. Polytetrafluorethylen) besteht. Gleitlager sind vorteilhaft, z.B. gegenüber Kugellagern, günstiger und konstruktiv weniger anspruchsvoll. Die Verwendung von Ringen erlaubt vorteilhaft eine geringere Kontaktfläche zwischen der Lenkstange **(3.3)** und dem Innenrohr **(5.0).** Die Verwendung eines günstigen Gleitlagers ist möglich, da die zwei Radiallager **(6.2)** die überwiegenden Kräfte des Lenksystems aufnehmen und das Gleitlager nur geringe Lasten und relativ langsame Lenkbewegungen aufnehmen muss.

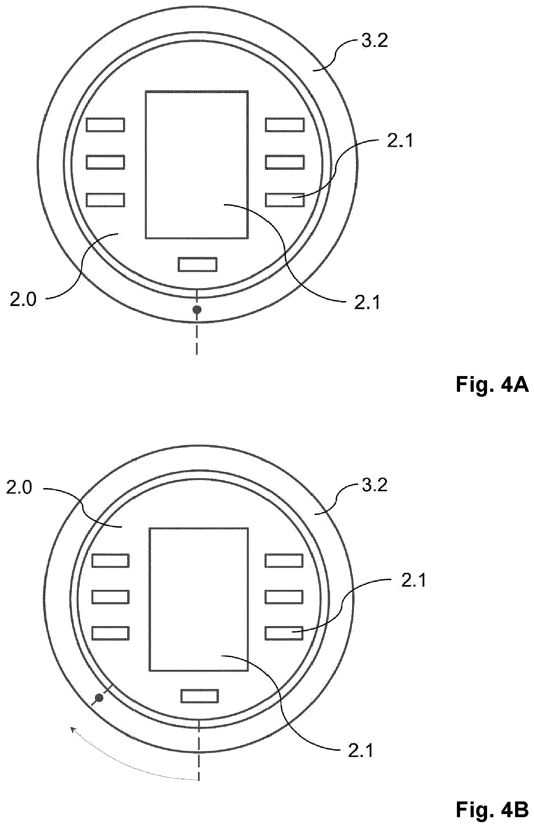

Die **Fig. 4A** und **4B** zeigt eine beispielhafte Anordnung einer Anzeigevorrichtung **(2.0)** umfassend Anzeige- oder Bedienelemente **(2.1),** wobei diese hier einen zentralen Monitor und Taster und um diesen herum angeordnete Taster umfassen. Die Anzeigevorrichtung **(2.0)** ist im Zentrum des Lenkmittels **(3.2)** angeordnet. Die Fig. 4A zeigt das unbewegte Lenkmittel **(3.2)** während die Fig. 4B das teilweise um die Lenkerachse **(3.1)** rotierte Lenkmittel **(3.2)** zeigt (Angedeutet durch den Punkt und der Rotationspfeil). Während das Lenkmittel **(3.2)** rotiert, bleibt die Anzeigevorrichtung **(2.0)** erfindungsgemäß statisch.

Die gezeigten Ausführungsformen der Erfindung sind jeweils beispielhaft und nicht beschränkend zu verstehen. Die Erfindung kann auch auf hiervon abweichende Weise ausgeführt werden. Beispielsweise kann die Anzahl und Anordnung der Anzeige- oder Bedienelemente **(2.1)** variiert werden. Ebenso können die Anzahl und Ausgestaltung der Lagerungselemente **(6.1)** variiert werden.

Die vorstehenden Ausführungen sind nur einige bevorzugte und realisierbare Ausführungsformen der vorliegenden Erfindung. Daher sind alle gleichwertigen strukturellen Änderungen, die durch Anwendung der Beschreibung der Erfindung vorgenommen werden, in den Umfang der Patentanmeldung einzubeziehen.

Obwohl die Erfindung unter Bezugnahme auf bestimmte Ausführungsbeispiele beschrieben und illustriert wurde, soll die Erfindung nicht auf diese Ausführungsbeispiele beschränkt werden. Der Fachmann erkennt, dass Variationen und Modifikationen vorgenommen werden können, ohne dass der wahre Umfang der Erfindung, wie er durch die Ansprüche und Beschreibung definiert ist, verlassen wird. Es ist daher beabsichtigt, im Rahmen der Erfindung alle Variationen und Modifikationen, die in den Anwendungsbereich der beigefügten Ansprüche und deren Äquivalente fallen, einzuschließen.

### BEZUGSZEICHENLISTE

- 1.0: Fahrzeug-Infotainment-Haltevorrichtung
- 2.0: Anzeigevorrichtung
- 2.1: Anzeige- oder Bedienelemente
- 2.2: Grundhalterung
- 2.3: Grundplatte
- 3.0: Lenksystem
- 3.1: Lenkachse
- 3.2: Lenkmittel
- 3.3: Lenkstange
- 3.4: radiales Lenkzugelement
- 4.0: Fahrzeugrahmen
- 5.0: Innenrohr
- 5.1: Kabelkanal
- 5.2: Kabelverbindung
- 6.0: Lagerungs- oder Befestigungsvorrichtung
- 6.1: Lager/Lagerungselement
- 6.2: Radiallager
- 6.3: Kugellager
- 6.4: Schraubverbindung

## Patentansprüche

1. **Fahrzeug-Infotainment-Haltevorrichtung (1.0)** für eine zentrale Halterung einer Anzeigevorrichtung **(2.0)** an einem Lenksystem **(3.0)** eines Fahrzeugs, wobei
- das Fahrzeug einen Fahrzeugrahmen **(4.0)** umfasst,
- das Lenksystem für eine Rotation um eine Lenkachse **(3.1)** eingerichtet ist,
- das Lenksystem (3.0) ein Lenkmittel (3.2) umfasst, und
- das Lenksystem (3.0) eine Lenkstange (3.3) umfasst, wobei an einem Ende der Lenkstange **(3.3)** das Lenkmittel **(3.2)** des Lenksystems **(3.0)** befestigt oder befestigbar ist,
**dadurch gekennzeichnet, dass**
die Lenkstange **(3.3)** hohl ausgebildet ist, und
die Lenkstange **(3.3)** koaxial um ein Innenrohr **(5.0)** angeordnet und rotierbar gelagert ist, wobei das Innenrohr **(5.0)**
- durch zumindest eine Lagerungs- oder Befestigungsvorrichtung **(6.0)** fest bezüglich des Fahrzeugrahmens **(4.0)** angeordnet ist,
- an einem Ende der Lenkstange **(3.3),** an dem das Lenkmittel **(3.2)** befestigt oder befestigbar ist, aus der Lenkstange **(3.3)** herausragt und
an diesem Ende die Anzeigevorrichtung **(2.0)** derart befestigt oder befestigbar ist, dass
Kabelverbindungen **(5.2)** zum Betrieb der Anzeigevorrichtung **(2.0)** durch das Innenrohr **(5.0)** geführt oder führbar sind.

2. Vorrichtung gemäß Anspruch 1, wobei die Lenkstange **(3.3)** ein radiales Lenkzugelement **(3.4)** umfasst.

3. Vorrichtung gemäß Anspruch 1 oder 2, wobei die Lenkstange **(3.3)** mit zumindest einem Radiallager **(6.2)** um das Innenrohr **(5.0)** drehbar gelagert ist

4. Vorrichtung gemäß einem der Ansprüche 1 bis 3, wobei das Innenrohr **(5.0)** an dem Ende, an dem es nicht aus der Lenkstange **(3.3)** herausragt, mit dem Fahrzeugrahmen **(4.0)** mittels einer Schraubverbindung **(6.4)** reversibel verbunden ist.

5. Vorrichtung gemäß einem der Ansprüche 1 bis 4, wobei die Anzeigevorrichtung **(2.0)** einen Lenkradairbag umfasst.

6. Vorrichtung gemäß einem der Ansprüche 1 bis 5, wobei die Anzeigevorrichtung **(2.0)** sicherheitsrelevante Steuerungselemente umfasst.

7. Vorrichtung gemäß einem der Ansprüche 1 bis 6, wobei das Lenkmittel **(3.2)** als ein Lenkrad ausgestaltet ist.

8. Vorrichtung gemäß einem der Ansprüche 1 bis 7, wobei die Anzeigevorrichtung **(2.0)** eine weitgehend kreisrunde Form aufweist, wobei der gesamte Durchmesser der Anzeigevorrichtung **(2.0)** innerhalb des Innendurchmessers des Lenkmittels **(3.2)** angeordnet ist.

9. **Verwendung der Fahrzeug-Infotainment-Haltevorrichtung** nach einem der Ansprüche 1 bis 8 in einem Fahrzeug.
